# EUROPEAN PATENT APPLICATION

(11) **EP 1 803 951 A2**
(43) Date of publication of application: **04.07.2007**
(21) Application number: 06027020.4
(22) Date of filing: 28.12.2006
(51) Int. Cl.: F16C 33/14

(54) **Method of manufacturing hollow member**

(30) Priority: 28.12.2005 JP 2005377430
(71) Applicant: JTEKT Corporation, Osaka-shi Osaka 542-8502 (JP)
(72) Inventor: Saitou, Toshikazu c/o JTEKT CORPORATION, Osaka-shi, Osaka 542-8502 (JP)
(74) Representative: Schaeberle, Steffen

(57) **Abstract**

A washer (5) is provided between two inner rings (1) arranged in a row, and annular washers (6) are disposed outside the inner rings in the axial direction of the inner rings, respectively. A bolt (2) is inserted into the two inner rings so that a head part of the bolt (8) comes in contact with the washer disposed outside one inner ring in the axial direction of the inner ring. A nut (3) is fastened on an end of the bolt opposite to the head part, from the outside of the washer. The inside of the through holes of the inner rings is substantially completely isolated from the outside thereof. The inner rings of which the inside of the through holes is substantially completely isolated from the outside are exposed to a carburizing atmosphere at high temperature, so as to perform carburizing and quenching only on the outer surfaces of the inner rings.

## Description

### BACKGROUND OF THE INVENTION

The present invention relates to a method of manufacturing a hollow member, such as an inner ring of a bearing, an outer ring of a bearing, or a rocker arm, and more particularly, to a method of manufacturing a hollow member that performs a heat treatment such as a surface hardening treatment (for example, carburizing, nitriding, or carbonitriding), etching, or film formation only on the outer surface of a hollow member.

A method of manufacturing a hollow member in the related art is disclosed in JP-A-8-60335. According to the method of manufacturing a hollow member in the related art, an anti-carburizing material formed of a water glass or the like is applied on a portion of a hollow member where carburizing and quenching is not intended to be performed, for example, on the inner periphery of a hollow member, and then dried. Subsequently, the hollow member on which the anti-carburizing material is partially applied is exposed to a carburizing atmosphere at high temperature to perform carburizing and quenching only on the portion of the hollow member where the anti-carburizing material is not applied. Then, the anti-carburizing material is removed. As a result, it is possible to harden only desired portions.

However, according to the method of manufacturing a hollow member, it is difficult to distinguish a hollow member where an anti-carburizing material is applied from a hollow member where an anti-carburizing material is not applied. For this reason, in general, the anti-carburizing material should be applied several times for the sake of safety. Further, since the applied anti-carburizing material should be removed after the carburizing and quenching, there is a problem that a lot of man-hours (efforts) and time are required to manufacture a hollow member.

Further, according to the method of manufacturing a hollow member, when a groove or thread is formed on the inner periphery of the hollow member, it is difficult to apply the anti-carburizing material on the recesses of the groove or thread. If the anti-carburizing material is not sufficiently applied on the recesses of the groove or thread, the toughness of the groove or thread deteriorates after the carburizing and quenching. As a result, there is a problem that the groove or thread is easily damaged. In addition, there is another problem that it is difficult to remove the anti-carburizing material applied on the groove or thread after the carburizing and quenching.

A method of performing high frequency heating on the outer surface of a hollow member to perform quenching only on the outer surface of the hollow member has been used as another method of manufacturing a hollow member. However, according to this method, a predetermined hardness is not obtained by high frequency heating in some materials, and cracks occur in the hollow member having a small thickness. That is, there is another problem that the application of this method is limited to specific material or thickness of the hollow member.

### SUMMARY OF THE INVENTION

Accordingly, it is an object of the invention to provide a method of manufacturing a hollow member that can perform a specific treatment only on the outer surface of a hollow member at relatively low cost and obtain a hollow member that has more various shapes and is made of more various materials.

In order to achieve the above-mentioned object, according to an embodiment of the invention, a method of manufacturing a hollow member, the method comprises:
preparing at least one hollow member including a hole;
preparing an insertion member including a shaft part and a head part;
preparing a fastening member;
isolating an inside of the hole of the at least one hollow member from the outside by inserting the insertion member into the hole and fastening the fastening member on the shaft part protruding from the hole so that the at least one hollow member is fastened by the head part and the fastening member; and
performing a specific treatment on an outer surface of the at least one hollow member by exposing the at least one hollow members, in which the inside of the holes is isolated from the outside, to a treatment atmosphere.

The specific treatment includes a surface hardening treatment (for example, carburizing, nitriding, or carbonitriding), tempering, or a general heat treatment such as annealing. Further, the specific treatment includes etching or film formation.

According to the embodiment of the invention, a specific treatment is performed on the outer surfaces of the at least one hollow member by exposing one or more hollow members, of which the inside of the holes is isolated from the outside, to a treatment atmosphere. Therefore, it is possible to more simply and inexpensively perform the specific treatment on the outer surfaces of the at least one hollow member, as compared to a method of applying a treatment-prevention material (a material for preventing the occurrence of a specific treatment) on an inner periphery.

In addition, according to the embodiment of the invention, even though each hollow members is formed to any size and shape and is made of any material, it is possible to perform the specific treatment on the outer surface of the hollow member as long as the insertion member and fastening member are prepared to correspond to the size and shape of each hollow member. Therefore, according to the method of the invention, it is possible to obtain the hollow member, which has more various shapes and is made of more various materials, as compared to a method of using a high frequency wave.

Further, in the method of manufacturing a hollow member according to the embodiment of the invention, the at least one hollow members is fastened by the head part and the fastening member in the isolation step so that a washer is provided in at least one of a gap between the head part of the insertion member and an end face of the hollow member adjacent to the head part and a gap between the fastening member and an end face of the hollow member adjacent to the fastening member.

According to the embodiment of the invention, it is possible to improve the airtightness of the inner spaces of the at least one hollow members after the isolation step. Accordingly, in the outer surface treatment step, it is possible to reliably prevent the inner peripheries of one or more hollow member from being exposed to a specific atmosphere.

Further, in the method of manufacturing a hollow member according to the embodiment of the invention, a coefficient of linear expansion of the washer is larger than that of any one of the hollow members, the insertion member, and the fastening member.

According to the embodiment of the invention, a coefficient of linear expansion of the washer is larger than that of any one of the hollow members, the insertion member, and the fastening member. Accordingly, when the outer surface treatment step is performed at high temperature after the isolation step, the washer is expanded more than the other members during the outer surface treatment step. For this reason, a pressing force of the washer against the end faces of the hollow members having a hole is significantly increased. As a result, it is possible to further improve the airtightness of the inner spaces of the hollow members.

Furthermore, in the method of manufacturing a hollow member according to the embodiment of the invention, an inner periphery of at least one hollow member includes at least one of a groove, a step, and a thread.

According to the embodiment of the invention, at least one of a groove, a step, and a thread is formed on the inner periphery of at least one hollow member. For this reason, it is possible to more simply and inexpensively perform the specific treatment on the outer surfaces of the hollow members, as compared to a method of applying a treatment-prevention material on an inner periphery. Further, in the outer surface treatment step, it is possible to reliably prevent the toughness of at least one of the groove, the step, and the thread from deteriorating.

According to a method of manufacturing a hollow member of the invention, a specific treatment is performed on the outer surface of the at least one hollow member by exposing the at least one hollow member, of which the inside of the holes is isolated from the outside, to a treatment atmosphere. Accordingly, it is possible to simply and inexpensively perform the specific treatment on the outer surfaces of the at least one hollow member.

According to a method of manufacturing a hollow member of the invention, even though each hollow members is formed to any size and shape and is made of any material, it is possible to perform the specific treatment on the outer surface of the hollow member as long as the insertion member and fastening member are prepared to correspond to the size and shape of each hollow member. Therefore, according to the method of the invention, it is possible to obtain the hollow member, which has more various shapes and is made of more various materials.

### BRIEF DESCRIPTION OF THE DRAWINGS

Fig. 1 is a perspective view of an inner ring when the inner ring of an alternator bearing is being manufactured by a method of manufacturing a hollow member according to a first embodiment of the invention.
Fig. 2 is a perspective view of a cylindrical member when the cylindrical member having a thread therein is being manufactured by a method of manufacturing a hollow member according to a second embodiment the invention.

### DETAILED DESCRIPTION OF PREFERRED EMBODIMENTS

Hereinafter, preferred embodiments of the invention will be described in detail with reference to accompanying drawings.

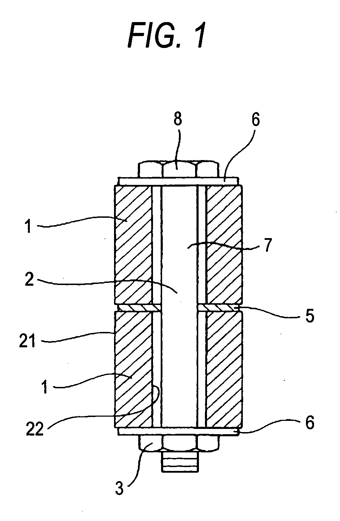

Fig. 1 is a perspective view of an inner ring 1 when the inner ring 1 of an alternator bearing is being manufactured by a method of manufacturing a hollow member according to a first embodiment of the invention.

In Fig. 1, reference numeral 1 indicates a hollow member, that is, an inner ring of an alternator bearing that supports a rotor shaft of an alternator. Further, reference numeral 2 indicates a bolt that is an example of an insertion member, and reference numeral 3 indicates a nut that is an example of a fastening member. Reference numerals 5 and 6 indicate washers (gaskets). The bolt 2 includes a shaft part 7 and a head part 8, and a thread is formed at an end of the shaft part 7 opposite to the head part. In other words, the head part 8 having a large diameter is formed at one end of the bolt 2, and the thread is formed at the other end of the bolt 2. The diameter of the head part 8 of the bolt 2, the diameter of the circumscribed circle of the nut 3 and the diameters of the washers 5 and 6 are larger than the diameter of an opening of each inner ring 1.

The inner ring 1 is made of chrome steel (SCR) or case-hardening steel (case hardened steel) (carbon steel {S9CK, S15CK, S20CK, or the like}). The bolt 2 and the nut 3 are made of general structural rolled steel (for example, SS). Further, the washers 5 and 6 are made of austenitic stainless steel (for example, SUS304). The coefficients of linear expansion of the washers 5 and 6 are larger than that of any one of the inner rings 1, the bolt 2, and the nut 3. Hereinafter, a method of manufacturing an inner ring of an alternator bearing according to the first embodiment will be described with reference to Fig. 1.

First, an isolation process is performed. In the isolation process, two the same inner rings 1 and 1 and the annular washer 5 are arranged in a row so that one end faces of the inner rings 1 come in contact with each other with the annular washer 5 interposed between the inner rings, that is, the washer 5 is interposed between the two inner rings 1. Next, the annular washers 6 and 6 are disposed outside the inner rings 1 in the axial direction of the inner ring to come in contact with the end faces of the inner rings 1. Then, the bolt 2 is inserted into the through holes of the washer **6,** the inner ring 1, the washer 5, the inner ring 1, and the washer 6, in this order. Subsequently, the nut 3 is fitted on the thread of the shaft part 7 of the bolt 2, which protrudes from the through hole of the washer to the outside. After that, a fastening torque is applied to the nut 3 to fasten the nut 3 on the thread. Accordingly, the washer 6, the inner ring 1, the washer 5, the inner ring 1, and the washer 6, which are arranged in a row, are fastened in the axial direction by the head part 8 and the nut 3. In this case, the thread of the shaft part 7 and the nut 3 come in close contact with each other without a gap of the thread. Fig. 1 shows an assembly structure in which the two washers 6, the two inner rings 1, the washer 5, the bolt 2, and the nut 3 are come in close contact with each other as described above. Since the components are fastened in the axial direction by the head part 8 and the nut 3 in the assembly structure, the inner space of each through hole is isolated from the outside thereof. For this reason, air can hardly enter the inner space of the assembly structure from the outside of the assembly structure.

Next, an outer surface treatment process is performed. In the outer surface treatment process, the assembly structure shown in Fig. 1 is disposed in a gas carburizing furnace. Then, at high temperature, the assembly structure is exposed to the carburizing atmosphere that is an example of a treatment atmosphere such as natural gas (mainly methane (CH₄)), city gas, propane gas (C₃H₈), butane gas (C₁H₁₀), or ethane (C₂H₆), to perform carburizing and quenching on the outer surfaces 21 of the inner rings 1. When the carburizing and quenching is performed on the outer surfaces 21 of the inner rings 1, hydrocarbon gas used as the carburizing atmosphere is decomposed and generates soot. The soot is attached on the outer surfaces 21 of the inner rings 1, and thus prevents the carburization of the outer surface. For this reason, according to this embodiment, a mixture, in which a little of CH₄, propane, or butane is mixed with carrier gas having low carburizing property, is mixed into the carburizing atmosphere to perform the carburizing and quenching. Further, N₂ can be used as the carrier gas. Furthermore, RX gas (CO: 20%, H₂: 40%, N₂: 40%) can also be used as the carrier gas. In this case, it is possible to obtain the RX gas by mixing hydrocarbon with air, and thermally decomposing the mixture of hydrocarbon and air by using Ni as a catalyst. Accordingly, the carburizing and quenching is performed only on the outer surfaces 21 of the inner rings 1. As a result, it is possible to manufacture an inner ring 1 in which carburizing and quenching is not performed on an inner periphery 22 thereof.

According to the method of manufacturing the inner ring 1 of the first embodiment, while the inner periphery 22 of the inner ring 1 is substantially completely isolated from the outside (while an inner space of the inner ring 1 is substantially completely sealed), the inner ring 1 in which the inner space of the through hole is substantially completely isolated from the outside is exposed to the carburizing atmosphere to perform the carburizing and quenching on the outer surface 21 of the inner ring 1. Therefore, it is possible to more simply and inexpensively perform the carburizing and quenching on the outer surface 21 of the inner ring 1, as compared to a method of applying an anti-carburizing material (water glass-based material) on an inner periphery.

In addition, according to the method of manufacturing the inner ring 1 of the first embodiment, even though the inner ring 1 is formed to any size and shape and is made of any material, it is possible to perform the carburizing and quenching on the outer surface 21 of the inner ring 1 as long as the bolt 2 and nut 3 are prepared to correspond to the size and shape of the inner ring 1. Therefore, according to the method of the first embodiment, it is possible to obtain the inner ring 1, which has more various shapes and is made of more various materials, as compared to a method of using a high frequency wave.

In addition, according to the method of manufacturing the inner ring 1 of the first embodiment, the opening of the inner ring 1 is substantially completely closed by the washer 5 in the isolation process. Accordingly, it is possible to improve the airtightness of the inner spaces of the inner rings 1 after the isolation process. As a result, in the outer surface treatment process, it is possible to reliably prevent the inner periphery 22 of the inner ring 1 from being exposed to the carburizing atmosphere.

Further, according to the method of manufacturing the inner ring 1 of the first embodiment, the coefficient of linear expansion of the washer 5 is larger than that of any one of the inner ring 1, bolt 2, and nut 3. Accordingly, when the carburizing and quenching is performed at high temperature, the washer 5 is expanded more than the inner ring 1, bolt 2, and nut 3. For this reason, a pressing force of the washer 5 against the end faces of the inner rings 1 is significantly increased, so that it is possible to further improve the airtightness of the inner spaces of the inner rings 1. As a result, it is possible to manufacture the inner ring 1 having high quality.

Furthermore, according to the method of manufacturing the inner ring 1 of the first embodiment, two inner rings 1 are arranged in a row, and the bolt 2 is inserted through the two inner rings 1 arranged in a row. Then, the carburizing and quenching is simultaneously performed on the outer surfaces 21 of the two inner rings 1. Accordingly, it is possible to effectively perform the carburizing and quenching on the outer surfaces of many inner rings 1 and to reduce the manufacturing cost of the inner rings 1. Further, according to the embodiment of the invention, it is possible to use a bolt being sold on the market as the insertion member and to use a nut being sold on the market as the fastening member. For this reason, it is unnecessary to separately manufacture the insertion member and fastening member, thereby reducing manufacturing cost.

The assembly structure is exposed to the carburizing atmosphere to perform the carburizing and quenching on the outer surface 21 of the inner ring 1 in the outer surface treatment process of the method of manufacturing the inner ring 1 of the first embodiment. However, in the outer surface treatment process of the invention, the assembly structure in which the inner spaces of the through holes of the hollow members are substantially completely isolated from the outside may be exposed to the nitriding atmosphere in the nitriding furnace to nitride the outer surface of the hollow member. Alternatively, in the outer surface treatment process of the invention, the assembly structure in which the inner spaces of the through holes of the hollow members are substantially completely isolated from the outside may be exposed to the carbonitriding atmosphere to carbonitride the outer surface of the hollow member. As described above, in the outer surface treatment process, the assembly structure in which the inner spaces of the through holes of the hollow members are substantially completely isolated from the outside may also be exposed to the atmosphere for thermal treatment to perform a thermal treatment other than the carburizing on the outer surface of the hollow member. Further, in the outer surface treatment process of the invention, the assembly structure in which the inner spaces of the through holes of the hollow members are substantially completely isolated from the outside may also be exposed to atmosphere such as etching gas or the film forming gas to perform etching or film formation only on the outer surface of the hollow member. A process of chemically changing atoms or molecules of the outer surface of the hollow member may be performed in the outer surface treatment process.

In addition, according to the method of manufacturing the inner ring 1 of the first embodiment, the assembly structure that includes the two inner rings 1, the bolt 2, and the nut 3 is provided, and the nitriding is simultaneously performed on the outer surfaces 21 of the two inner rings 1. However, in the invention, an assembly structure that includes one hollow member, one insertion member, and one fastening member is provided, and a treatment may be performed only on the outer surface of the hollow member. Further, in the invention, an assembly structure that includes three or more hollow members, one insertion member, and one fastening member is provided, and a treatment may be simultaneously performed on the outer surfaces of the three or more hollow members.

Further, according to the method of manufacturing the inner ring 1 of the first embodiment, three washers 5, and 6 (washer 5 and two washers 6) are provided between the two inner rings 1, and on the outer end faces of the inner rings 1 that are opposite to each other, to improve the airtightness of the inner space of each inner ring 1-However, the washers may be omitted in the invention, and the head part of the insertion member or the fastening member may directly close the openings of the hollow members. Alternatively, the two hollow members may come in close contact with each other so that the inner spaces of the two hollow members communicate with each other and the communicating spaces do not communicate with the outside. Accordingly, a washer (gasket) (the washer 5 in the first embodiment) provided at the connecting portion between the two hollow members may be omitted.

In addition, the inner ring 1 of a bearing is used as a workpiece having a treated outer surface 21 in the first embodiment. However, a hollow member other than the inner ring of a bearing, such as an outer ring of a bearing or a rocker arm may be used as a workpiece having a treated outer surface in the invention.

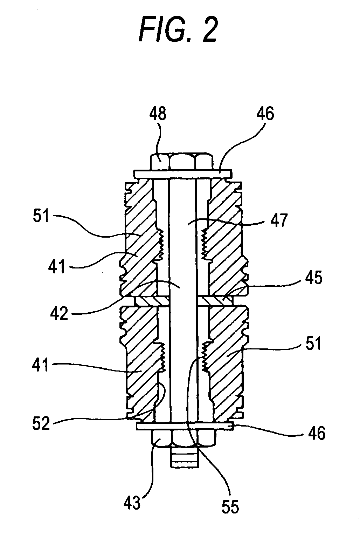

Fig. 2 is a perspective view of a cylindrical member 41 when the cylindrical member having a thread therein is being manufactured by a method of manufacturing a hollow member according to a second embodiment the invention.

In Fig. 2, reference numeral 41 indicates a cylindrical member, reference numeral 42 indicates a bolt, and reference numeral 43 indicates a nut. Further, reference numerals 45 and 46 indicate washers (gaskets), reference numeral 47 indicates a shaft part of the bolt 42, and reference numeral 48 indicates a head part of the bolt 42. In addition, reference numeral 51 indicates an outer surface of the cylindrical member 41, reference numeral 52 indicates an inner periphery of the cylindrical member 41, and reference numeral 55 indicates a thread formed on the inner periphery 52.

A method of manufacturing a hollow member according to the second embodiment is different from the method of manufacturing a hollow member according to the first embodiment in that a hollow member is not an inner ring of an alternator bearing but a cylindrical member 41 having a thread 55 on the inner periphery 52 thereof. The same operation and modification of the method of manufacturing a hollow member according to the first embodiment as the method of manufacturing a hollow member according to the second embodiment will be omitted.

According to the method of manufacturing a hollow member of the second embodiment, since the inner periphery 52 of the cylindrical member 41 has a thread 55 formed thereon, it is possible to more simply and inexpensively perform the carburizing and quenching on the outer surface 51 of the cylindrical member 41, as compared to a method of applying a treatment-prevention material on an inner periphery. Further, since the thread 55 is exposed to the carburizing atmosphere in the outer surface treatment process, it is possible to reliably prevent the toughness of the thread 55 from deteriorating.

In the method of manufacturing a hollow member of the second embodiment, the inner periphery 52 of the cylindrical member 41 has the thread 55 formed thereon. However, if a hollow member of which inner periphery has at least one of a thread, a step, and a groove is manufactured using the method of manufacturing a hollow member according to the invention, it is possible to more simply and inexpensively manufacture a hollow member having high quality, as compared to the method in the related art.

## Claims

1. A method of manufacturing a hollow member, the method comprising:
preparing at least one hollow member including a hole;
preparing an insertion member including a shaft part and a head part;
preparing a fastening member;
isolating an inside of the hole of the at least one hollow member from the outside by inserting the insertion member into the hole and fastening the fastening member on the shaft part protruding from the hole so that the at least one hollow member is fastened by the head part and the fastening member; and
performing a specific treatment on an outer surface of the at least one hollow member by exposing the at least one hollow members, in which the inside of the holes is isolated from the outside, to a treatment atmosphere.

2. The method according to claim 1, wherein, in the isolating step, the at least one hollow member is fastened by the head part and the fastening member so that a washer is provided in at least one of a gap between the head part of the insertion member and an end face of the hollow member adjacent to the head part and a gap between the fastening member and an end face of the hollow member adjacent to the fastening member.

3. The method according to claim 2, wherein a coefficient of linear expansion of the washer is larger than that of any one of the hollow members, the insertion member, and the fastening member.

4. The method according to claim 1, wherein an inner periphery of the at least one hollow member includes at least one of a groove, a step, and a thread.
